(19) Europäisches Patentamt
European Patent Office
Office européen des brevets

(11) **EP 4 621 707 A1**

(12) **EUROPEAN PATENT APPLICATION**

(43) Date of publication:
**24.09.2025   Bulletin 2025/39**

(21) Application number: **24165239.5**

(22) Date of filing: **21.03.2024**

(51) International Patent Classification (IPC):
**G06T 5/20** $^{(2006.01)}$

(52) Cooperative Patent Classification (CPC):
**G06T 5/20;** G06T 2207/10004; G06T 2207/10024;
G06T 2207/20016; G06T 2207/20028;
G06T 2207/20221

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Beijing Xiaomi Mobile Software Co.,
Ltd.
Beijing 100085 (CN)**

(72) Inventors:
• **TUNA, Uygar
Beijing, 100085 (CN)**

• **KARAOGLU, ALi
Beijing, 100085 (CN)**
• **RYTKÖNEN, Teemu
Beijing, 100085 (CN)**
• **BAN, Hao
Beijing, 100085 (CN)**
• **SHETTY, Ranjeeth
Beijing, 100085 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **METHOD FOR BILATERAL UPSAMPLING OF AN IMAGE**

(57)   Method for bilateral interpolation of an image, including: Providing an input image to be upscaled by bilateral interpolation; Providing an initial image; Providing a guide image; For each pixel location in the final image or a corresponding pixel location in the initial image, select a region of interest, $ROI_{spat}$, in the input image around the respective pixel location and determine a spatial distance $d_{spat}$ from the pixel location to each pixel of the input image within the $ROI_{spat}$; For each pixel location in the initial image select a region of interest, $ROI_{int}$, in the guide image around the respective pixel location and determine an intensity distance $d_{int}$ from the pixel location to each pixel of the guide image within the $ROI_{int}$; Determine the pixel value at the pixel location on the basis of a weighted average over all pixels in the $ROI_{spat}$ based on the spatial distance and a weighted average over all pixels in the $ROI_{int}$ based on the intensity distance to generate a final image.

EP 4 621 707 A1

S02

| Providing an input image to be upscaled by bilateral interpolation | Providing an initial image | Providing a guide image |

S01

For each pixel location in the final image or a corresponding pixel location in the initial image, select a region of interest, $ROI_{spat}$, in the input image around the respective pixel location and determine a spatial distance $d_{spat}$ from the pixel location to each pixel of the input image within the $ROI_{spat}$

S03

S04

For each pixel location in the initial image select a region of interest, $ROI_{int}$, in the guide image around the respective pixel location and determine an intensity distance $d_{int}$ from the pixel location to each pixel of the guide image within the $ROI_{int}$

S05

Determine the pixel value at the pixel location on the basis of a weighted average over all pixels in the $ROI_{spat}$ based on the spatial distance and a weighted average over all pixels in the $ROI_{int}$ based on the intensity distance to generate a final image.

S06

Fig. 1

**Description**

The present invention relates to a method for bilateral interpolation of an image and in particular to upscaling of an image by bilateral interpolation. Further the present invention relates to a device and a software storage product implementing such a method.

Digital images are consistently growing in size, transitioning from video frames with a quarter million pixels to multi-megapixel digital photos. Concurrently, image processing operations, including Local Tone-Mapping (LTM), Image Quality Enhancement (IQE), Spatial Auto White Balance (AWB), Dense Optical Flow (DOF), Bokeh, depth Super Resolution (SR), colorization and more, have demonstrated effectiveness in enhancing photographs. However, the prevalent use of mobile phones for capturing and processing the majority of photographs presents a challenge due to their limited computational capabilities on the edge processor (i.e. processing units on the device), driven by strict power budgets. This limitation makes many commonly known algorithms from the literature impractical for the deployment on mobile devices especially for real time application. A common strategy to expedite an image processing operation is to apply it at low resolution and then upscale the result to generate a final image. Ideally, this upscaling process should reintroduce details present in the high-resolution original that were lost during downscaling. Thus, in the image processing operation, only the amount of data of the low resolution image need to be handled, reducing the computational requirements and allowing fast or even real-time processing.

As the field of image processing continues to advance, the development of upscaling algorithms has become increasingly significant in enhancing the resolution and quality of digital images. Upscaling, also known as image interpolation or enlargement, involves the generation of high-resolution images from lower-resolution counterparts.

The early days of upscaling algorithms were marked by simple methods such as nearest-neighbor interpolation, bilinear interpolation, and bicubic interpolation. Nearest-neighbor interpolation selects the value of the nearest pixel, bilinear interpolation considers a weighted average of the four nearest pixels, and bicubic interpolation extends this to a 4x4 neighborhood. While these methods provided basic upscaling capabilities, they often resulted in blurry and artifact-ridden images.

In the realm of hardware-friendly upscaling algorithms, bilinear interpolation and nearest-neighbor interpolation stand out as particularly efficient choices. Bilinear interpolation involves a simple weighted average of neighboring pixels, making it computationally lightweight and suitable for real-time applications. Nearest-neighbor interpolation, while less sophisticated, is even more computationally efficient as it directly selects the value of the nearest pixel without the need for complex calculations. These algorithms are well-suited for implementation on hardware with limited computational resources, such as embedded systems and low-power devices.

Additionally, line buffers play a crucial role in optimizing the efficiency of upscaling algorithms in hardware. Line buffers store rows of pixel values, allowing for parallel processing of multiple pixels simultaneously. By leveraging line buffers, hardware implementations can efficiently manage data flow, reducing the need for extensive random-access memory (RAM) and reducing the overall computational speed and power. On the other hand, these line buffers increase the area cost of the algorithms and are therefore not desired. Therefore, line-buffer free algorithms are desired as the cost of the hardware algorithm could be kept manageable while the power and computational speeds are not impacted. The combination of simple interpolation algorithms and effective use of line buffers makes these hardware-friendly approaches ideal for scenarios where computational resources are constrained.

It is and object of the present invention is to provide an upscaling or interpolation method which is efficient and has low hardware requirements.

The problem is solved by a method for bilateral interpolation of an image according to claim 1, a device according to claim 13 and a software storage product according to claim 14.

In an aspect of the present invention a method for bilateral interpolation of an image and in particular upscaling of the image is provided. The method includes:

    Providing an input image to be upscaled by bilateral interpolation;
    Providing an initial image;
    Providing a guide image;
    For each pixel location in the final image or a corresponding pixel location in the initial image select a region of interest ($ROI_{spat}$), in the input image around the respective pixel location and determine a spatial distance $d_{spat}$ from the pixel location to each pixel of the input image within the $ROI_{spat}$; For each pixel location in the initial image select a region of interest ($ROI_{int}$), in the guide image around the respective pixel location and determine an intensity distance $d_{int}$ from the pixel location to each pixel of the guide image within the $ROI_{int}$;
    Determine the pixel value at the pixel location on the basis of a weighted average over all pixels in the $ROI_{spat}$ based on the spatial distance and a weighted average over all pixels in the $ROI_{int}$ based on the intensity distance to generate a final image.

Thus, an input image is provided, wherein the input image is the image to be upscaled by the bilateral interpolation. The input image may be a mask. Further a guide image is provided as additional information to be used during the bilateral interpolation. The initial image is the raw image data or preprocessed image data captured by an image sensor, wherein the input image may be derived from the initial image by downscaling and additional image manipulation/processing. Hence, the initial image may be downscaled in order to apply one or more image processing operations such as LTM, IQE, spatial AWB, DOF, Bokeh, depth SR, colorization or the like. Therein, one or more of these image processing operations may be applied to the downscaled initial image in order to generate the input for the upscaling algorithm according to the present invention. Thus, the image processing operations can be applied faster, in real-time and hardware efficient due to the reduced image size and reduced amount of data. The resulting input image is then to be upscaled by the bilateral interpolation according to the present invention to obtain a final image.

For the bilateral interpolation a spatial distance $d_{spat}$ is calculated. Therein the spatial distance may be the Euclidean distance between the pixel location and the pixel taken from the input image. However, the present invention is not limited to the Euclidean distance as spatial distance and other metrics depending on the distance between the pixel location and the pixels in the input image within the $ROI_{spat}$. Therein, the pixel location my be a location/position of a pixel in the final image to be determined by the bilateral interpolation. If the final image and the initial image have the same resolution, the pixel location of the final image directly corresponds to a pixel location in the initial image. If the final image has a different resolution than the initial image, the $ROI_{spat}$ may be determined around a pixel location do be determined in the final image or a pixel location in the initial image corresponding to the pixel location do be determined in the final image.

In addition for each pixel location in the initial image, an intensity distance $d_{int}$ is determined indicative of the difference of intensity between the intensity at the pixel location and the respective pixel of the guide image within the $ROI_{int}$.

On the basis of the spatial distance and the intensity distance, a pixel value at the pixel location is calculated on the basis of a weighted average. Hence the information of the spatial distance as well as the information of the intensity distance in use of the guide image is utilized in order to preform bilateral interpolation or upscaling of the input image to a final image. Therein, the method can be performed pixelwise or as pixel-in-pixel-out type algorithm and thus does not require any line buffers. Consequently, the HW costs of implementing the present method can be reduced significantly.

Preferably, the guide image is monochromatic.

Preferably, the guide image is generated using either a conventional downscaling algorithm or a learning-based method.

Preferably, the size of the guide image is equal to the size of the input image to be upscaled by the bilateral interpolation. Hence the number of pixels in the guide image and the input image are same.

Preferably, the initial image is transformed into a monochromatic initial image prior to determine the intensity distance. Therein, transformation of the initial image into a monochromatic initial image may be the same as the transformation for generating the monochromatic guide image.

Preferably, the size of the initial image and the size of the final image is the same.

Preferably, the intensity distance is the difference in an intensity value of the respective considered pixels of the initial image/monochromatic initial image and the guide image.

Preferably, $ROI_{int}$ for determining the intensity distance is the same as the $ROI_{spat}$ for determining the spatial distance.

Preferably, the size of the $ROI_{int}$ is one of $2 \times 2$ pixel, $4 \times 4$ pixel, $8 \times 8$ pixel, $16 \times 16$ pixel, $32 \times 32$ pixel, $64 \times 64$ pixel or larger. Additionally or alternatively the size of $ROI_{spat}$ is one of $2 \times 2$ pixel, $4 \times 4$ pixel, $8 \times 8$ pixel, $16 \times 16$ pixel, $32 \times 32$ pixel, $64 \times 64$ pixel or larger.

Preferably, the size of $ROI_{spat}$ is equal for the whole image. Thus, for each pixel location in the initial image the same size of $ROI_{spat}$ is selected. Additionally or alternatively, the size of $ROI_{int}$ is equal for the whole image. Thus, for each pixel location in the initial image the same size of $ROI_{int}$ is selected.

Alternatively, the size of $ROI_{spat}$ is changed for respective pixel locations in the initial image, wherein the size of $ROI_{spat}$ may be adapted according to the initial image and in particular a structure size of objects either in the initial image, the input image or guide image. Alternatively or additionally, the size of $ROI_{int}$ is changed for respective pixel locations in the initial image, wherein the size of $ROI_{int}$ may be adapted according to the initial image and in particular a structure size of objects either in the initial image (i.e. the scene of the initial image), the input image or guide image.

Preferably, the spatial distance $d_{spat}$ and the intensity distance $d_{int}$ are combined by

$$d_{comb} = d_{spat} \cdot w_{spat} + d_{int} \cdot (1 - w_{spat}),$$

wherein $w_{spat}$ is an interpolating weight with $w_{spat} \in [0,1]$. In particular $w_{spat}$ may be selected to be between 0.4 and 0.6. In particular, the interpolation weight $w_{spat}$ is the same for each pixel location. Alternatively, the interpolation weight $w_{spat}$ may be adjusted for respective pixel locations. In particular the interpolation weight $w_{spat}$ is adapted according to the structure size of objects in the initial image (i.e. the scene of the initial image), the guide image or the input image.

If $w_{spat}$ = 1.0, then the interpolation uses only spatial location information for estimating the output pixel value. Therefore, the image content is omitted in the interpolation. If $w_{spat}$ = 0.0, then the interpolation uses only intensity information for estimating the output pixel value. Therefore, the spatial information is not used in the interpolation.

Accordingly, $w_{spat}$ being between 0.4 and 0.6 is posing a good compromise in using the spatial location information and also the image data.

Preferably, the weighted average used to determine the pixel value at the pixel location is determined by a weight $w_{pix}$ having an exponential decay with the spatial distance $d_{spat}$ and/or the intensity distance $d_{int}$ and/or the combined distance $d_{comb}$. In particular $w_{pix}$ is proportioned to one or more of exp(-$d_{spat}$), exp(-$d_{int}$) and exp(-$d_{comb}$). Therein, the exponential decay may be provided by an exponential function, Gaussian function or the like. Thus, pixels further away either in terms of distance or in terms of intensity are less considered for the pixel value in the final image. More specifically, the weight for the pixel value is calculated by $w_{pix}$ = exp (-$d_{comb}$ * k), where k is a configurable parameter. By changing, $k$, one can get more or less weights to the central part of the respective ROI. Therein, $k$ can be selected to be between 1 and 100 and in particular between 20 and 50. By controlling faster decay, weights for pixels further away are considered. Therein, parameter $k$ can be fixed for the whole final image. Alternatively, $k$ can be adapted for respective pixel locations in the final image and in particular adapted according to the structure of objects within the initial image, the guide image or the input image.

Preferably, for each pixel location the pixel value is determined by

$$\mathrm{HR}_{\mathrm{pix}} = \sum_{\mathrm{pix}\in ROI} w_{pix} * \mathrm{LR}_{\mathrm{pix}}$$

with $HR_{pix}$ being the pixel value in the final imge and $LR_{pix}$ the pixel value of the pixels in the input image. Therein, it is summarized over all pixels within the respective region of interest, either ROI$_{int}$, ROI$_{spat}$ or a combined ROI for both. Accordingly, the weight $w_{pix}$ may be adapted accordingly. Thus, for a ROI of a size of 4x4 pixels for calculation of the combined distance d$_{comb}$, the pixel value in the final image is interpolated by calculating the weighted average of the 16 pixels in the 4x4 sized ROI with the weighs $w_{pix}$.

Preferably the final image has a number of pixels 16 times more than the input image, preferably 32 times more and more preferably 64 times or more. Consequently, the scaling factor of the input image can be 16x, 32x or 64x or more.

In an aspect of the present invention a device is provided comprising a processor and a storage memory, wherein the storage memory stores instructions which, when executed by the processor, perform the steps of the method described before. Therein the device may be a user terminal such as a smartphone, tablet or the like. In particular the device may comprise a camera or image sensor in order to acquire the initial image. Therein, the device may further comprise an ISP pipeline in order to generate the input image to be upscaled by the bilateral interpolation. Therein, the initial image may be provided by the camera sensor in the input image and the guide image are provided by either the ISP or the processor. Therein, the initial image is downscaled and one or more of the image processing operations such as LTM, IqE, spatial AWB, DOF, Bokeh, depth SR, colorization or more are applied to the low-resolution image. The low-resolution input image may be a mask. After applying the image processing operation, the input image is upscaled to the final image by the method described before.

In an aspect of the present invention a software storage product is provided storing instructions which, when executed by a processor, perform the steps of the method described before.

In the following the present invention is described in more detail with reference to the accompanying figures.

The figures show:

Figure 1 a schematic flow diagram of the method according to the present invention,

Figure 2 an exemplary implementation of the method according to the present invention,

Figures 3a and 3b details for determining the spatial distance and the intensity distance,

Figure 4 a comparative example of the method according to the present invention applied to an image,

Figure 5 a comparative example of the method according to the present invention applied to a mask and

Figure 6 a device according to the present invention and

Figure 7 a device according to the present invention.

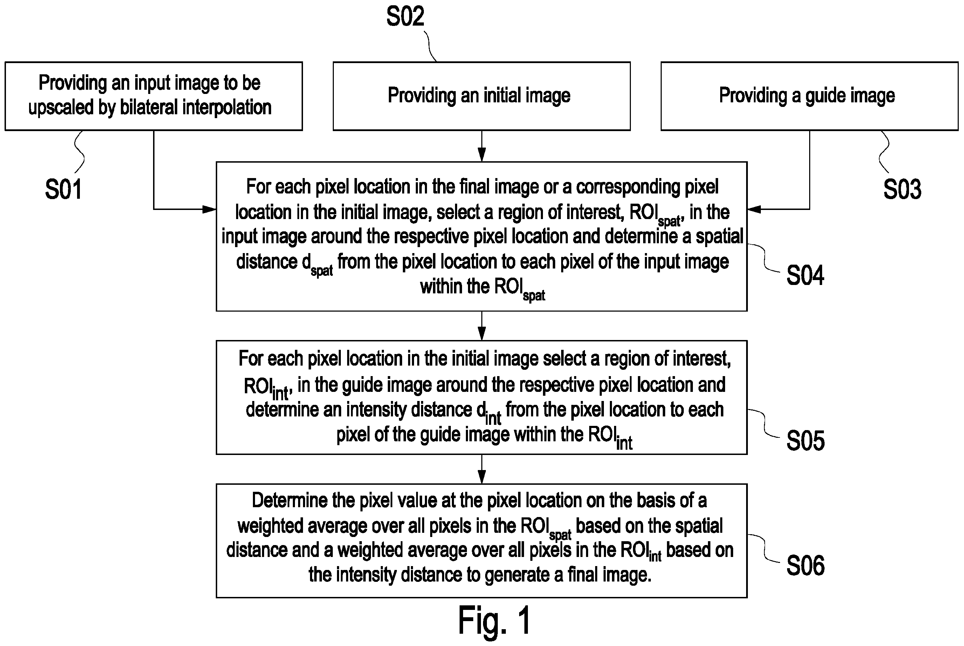

Referring to Figure 1 showing a schematic flow diagram according to the method of the present invention. The method includes:

In step S01, an input image is provided to be upscaled by bilateral interpolation.
In step S02, an initial image is provided.
In step S03, a guide image is provided.
In step S04, for each pixel location in the final image or a corresponding pixel location in the initial image, select a region of interest (ROI$_{spat}$), in the input image around the respective pixel location and determine a spatial distance d$_{spat}$ from the pixel location to each pixel of the input image within the ROI$_{spat}$.
In step S05, for each pixel location in the initial image select a region of interest (ROI$_{int}$), in the guide image around the respective pixel location and determine an intensity distance d$_{int}$ from the pixel location to each pixel of the guide image within the ROI$_{int}$.
In step S06, the pixel value at the pixel location is determined on the basis of a weighted average over all pixels in the ROI$_{spat}$ based on the spatial distance and a weighted average over all pixels in the ROI$_{int}$ based on the intensity distance to generate a final image.

Therein, the order of the steps can be adapted and is not limited to the indicated order above. Thus, the skilled person will understand that steps S01 to S03 can be performed in any order and also at the same time. Similar, steps S04 and S05 can be performed in any order and also at the same time. Further, calculation of the spatial distance $d_{spat}$ according to steps S01 and S04 can be performed independent of calculation of the intensity distance $d_{int}$ according to steps S02, S03 and S05.

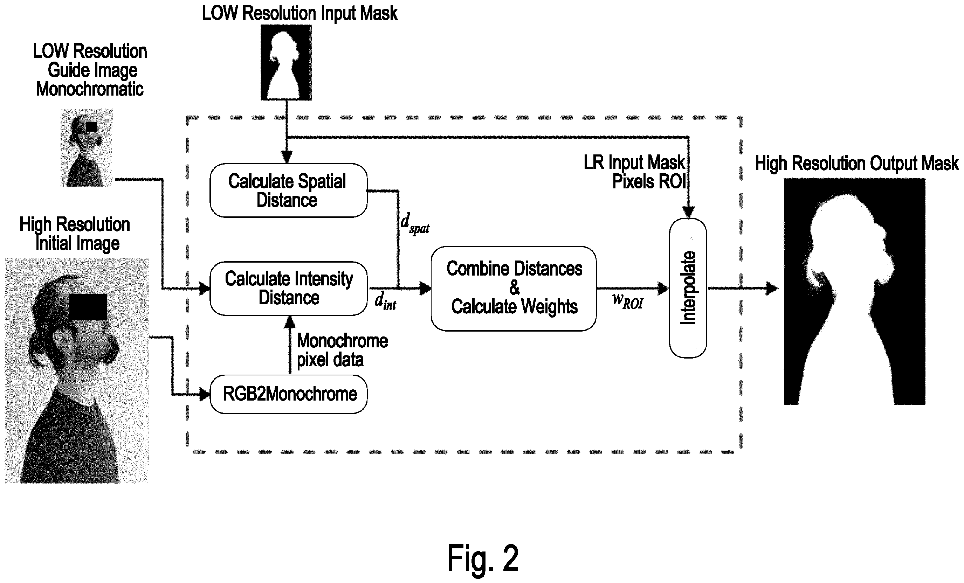

Referring to the exemplary implementation of the method shown in Figure 2. The use case of Figure 2 is a mask scaled up from a low-resolution input mask. Therein, the low-resolution input mask is used as input image to be upscaled by bilateral interpolation. In addition, a low-resolution monochromatic guide image is provided together with a high resolution initial image. The output of the algorithm is a high-resolution output mask as final image. Therein, the output mask can be used for spatial AWB or the like.

The high-resolution initial image may have a size which is usually provided by conventional camera sensors and may comprise 2MP or more, preferably 5MP or more and more preferably 10MP or more. The high-resolution initial image is transformed into a monochromatic initial image. Each pixel in the high-resolution initial image is transformed from its RGB value to a monochromatic pixel. The present invention is not limited to a specific type of conversion. For example, the conversion can be done by the following equation:
$M = w_R \cdot R + w_G \cdot G + w_B \cdot B$, where M is the output monochrome pixel value and $R, G$ and $B$ are the red, green and blue channels of the incoming pixel. In case, the standard transformation from RGB to grayscale (luma) calculation is desired, the weights $w_R$, $w_G$ and $w_B$ in the formula above shall be 0.2126, 0.7152, and 0.0722, for R, G and B channels, respectively. In particular the same transformation shall be used for generation of the low-resolution monochromatic guide image.

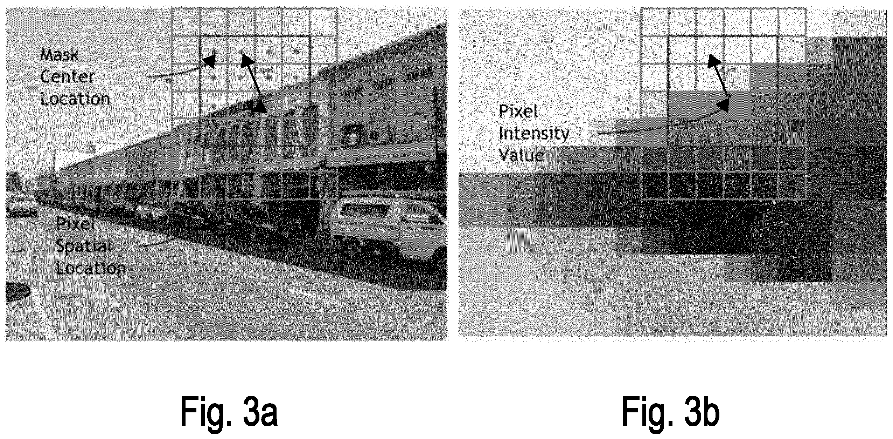

In order to calculate the spatial distance d$_{spat}$, for a given pixel location in the high-resolution initial image, a region of interest (ROI) is selected. In the example of figure 3a, the ROI is provided by the nearest 4x4 pixels (16 pixels) from the low-resolution monochromatic guide image and the low-resolution input image. The spatial distance d$_{spat}$ is the Euclidian distance between the pixel location of the high-resolution initial image and the pixels spatial coordinate of the low-resolution input image. This is indicated in Figure 3a showing the pixel spatial location in the initial image and the centre location of the pixels in the input image within the ROI provided by 4x4 pixels around the pixel location. Consequently, for each pixel location in the example of an ROI having a size of 4x4 pixels, 16 values for the spatial distance d$_{spat}$ are calculated.

Similar in order to calculate the intensity distance d$_{int}$, ROI of nearest 16 pixels in a 4x4 pattern around the given pixel location in the initial image is calculated. The intensity based distance d$_{int}$ is calculated using the absolute difference between the pixel intensity value of the monochromatic initial image and the low-resolution guide image intensity values. Consequently, also 16 intensity distances d$_{int}$ are calculated for an ROI of a size of 4x4. Subsequently, d$_{spat}$ and d$_{int}$ are combined by

$$d_{comb} = d_{spat} \cdot w_{spat} + d_{int} \cdot \left(1 - w_{spat}\right),$$

$w_{spat}$ being an interpolation weight. If $w_{spat}$ = 1.0, then the interpolation uses only spatial location information for estimating the output pixel value. Therefore, the image content is omitted in the interpolation. If $w_{spat}$ = 0.0, then the interpolation uses only intensity information for estimating the output pixel value. Therefore, the spatial information is not used in the interpolation.

From the combined distance $d_{comb}$ weights are calculated by $w_{pix}$ = exp ($-d_{comb}$ * k), where k is a configurable parameter. By changing, $k$, one can get more or less weights to the central part of the ROI. In the case of different ROIs for the intensity distance and the spatial distance, induvial weights and contributions can be calculated by

$$w_{pix}^{spat} = exp(-d_{spat} \cdot k_{spat})$$ and $$w_{pix}^{int} = exp(-d_{int} \cdot k_{int})$$ , with $k_{int}$ and $k_{spat}$ being scaling factors. In particular, $k_{int} = k_{spat}$.

In a last step the final image is interpolated, wherein the low-resolution input image is provided and with the pixel weights $w_{pix}$ the high-resolution output image is determined as final image. Therein, the pixel values are calculated by weighted averages of the 16 pixels in the 4x4 ROI using the weights $w_{pix}$ calculated for each pixel by

$$HR_{pix} = \sum_{pix \in ROI} w_{pix} * LR_{pix}.$$

If the ROI for determining the spatial distance and the intensity distance are different, the equation for calculating the values in the final image is provided by:

$$HR_{pix} = \sum_{pix \in ROI_{spat}} w_{pix}^{spat} * LR_{pix} + \sum_{pix \in ROI_{int}} w_{pix}^{int} * LR_{pix}.$$

Hence, by providing a low-resolution monochromatic guide image, a high-resolution final image generated which is interpolated from the low-resolution input image. Therein, upscaling factors of 32x, 64x and larger can be achieved. The present algorithm is implemented as pixel-in-pixel-out type algorithm and thus does not require any line buffers. Consequently, in an ISP hardware (HW) design, the HW costs of the present algorithm can be reduced significantly. Therein, the bilateral interpolation of the present invention uses both the location and the intensity information of the given pixels. Therein, for bilateral interpolation of an RGB image, the individual color channels can be upscaled by the bilateral interpolation individually. Hence, the method is applied for example to each of the RGB channels individually in order to upscale an RBG image.

This method according to the present invention can be used for many purposes. Here are examples for some algorithmic use-cases:

   a. **Local Tone Mapping (LTM)** where the user can define regional tone-mapping parameters as a low-resolution grid.
   b. **Image Quality Enhancement (IqE)** algorithms localized style manipulating parameters required to be upscaled to the original image resolution.
   c. **Spatial Auto White Balancing (AWB)** where a low-resolution white balance gain map needs to be estimated and upscaled to the full image resolution by taking the edge information inside the images. Different types of illumination transition need to be handled separately according to local statistic information.
   d. **Dense Optical Flow (DOF)** where the DOF data is estimated from a low-resolution image (which is the typical way to run DOF algorithms in ISP due to complex algorithms) and required to be upscaled to the target resolution. DOF are used usually multi-frame algorithms such as noise-reduction, super-resolution, high-dynamic range (HDR) processing etc.
   e. **Algorithms using Semantic Segmentation** such as face enhancements (e.g. face beautification, tone correction, face smoothing etc.), Bokeh algorithms, regional and contextual manipulations (such as sky replacement) may require our algorithm to upscale the given low-resolution semantic segmentation image.

The upscaling/interpolation can be coupled with a pre- or post-processing algorithms to further improve the upscaling accuracy. These algorithms may be learning based and/or traditional algorithms.

The algorithm in this invention is related to an upscaling algorithm. The proposed solution can be used as its own, or inside a digital image processing pipeline (also referred as ISP pipeline). The usage as a part of the image processing pipeline is typical in case of mobile digital camera imaging.

A primary application for the algorithm lies in upscaling mask images (but not constrained to it), which are integral to numerous image processing and computer vision algorithms. These include applications like Bokeh effects, background scene alterations, local tone mapping, AWB, and various others, where preserving regional spatial information is of paramount importance.

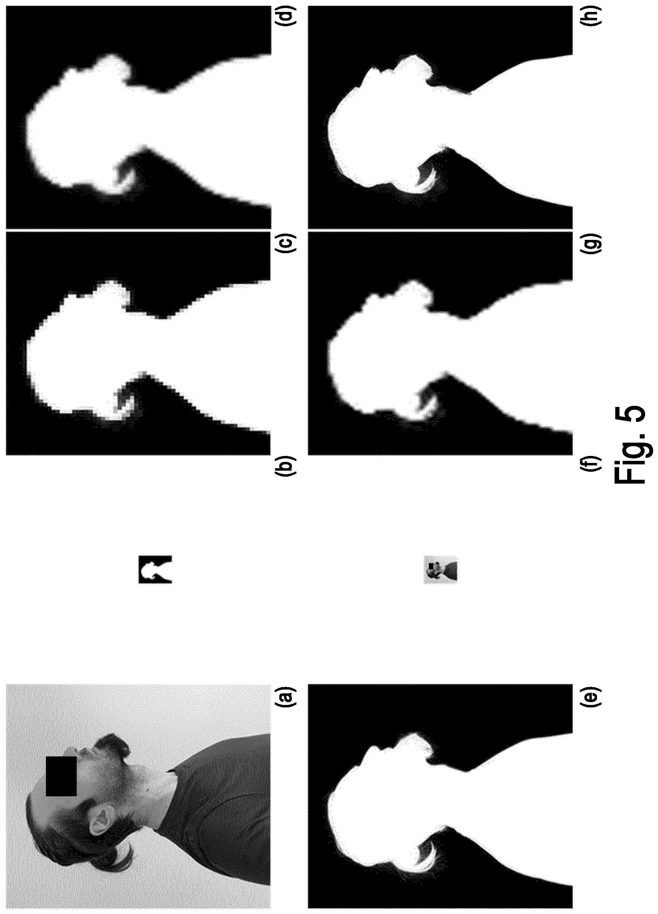

Furthermore, this method according to the present invention is used where embedded devices need to process statistical and spatial information and HW does not have the efficient processing capability for higher resolutions. The process is done for low resolution and the output is upscaled to the original resolution. A small demonstration is done in Figure 5, where the low-resolution input mask is upscaled successfully to the original image.

The lower-resolution input does not necessarily have to be a mask; it can be any 2D image, like the Y channel of YUV or the output from a neural network. This adaptability removes obstacles, making the algorithm applicable across various scenarios.

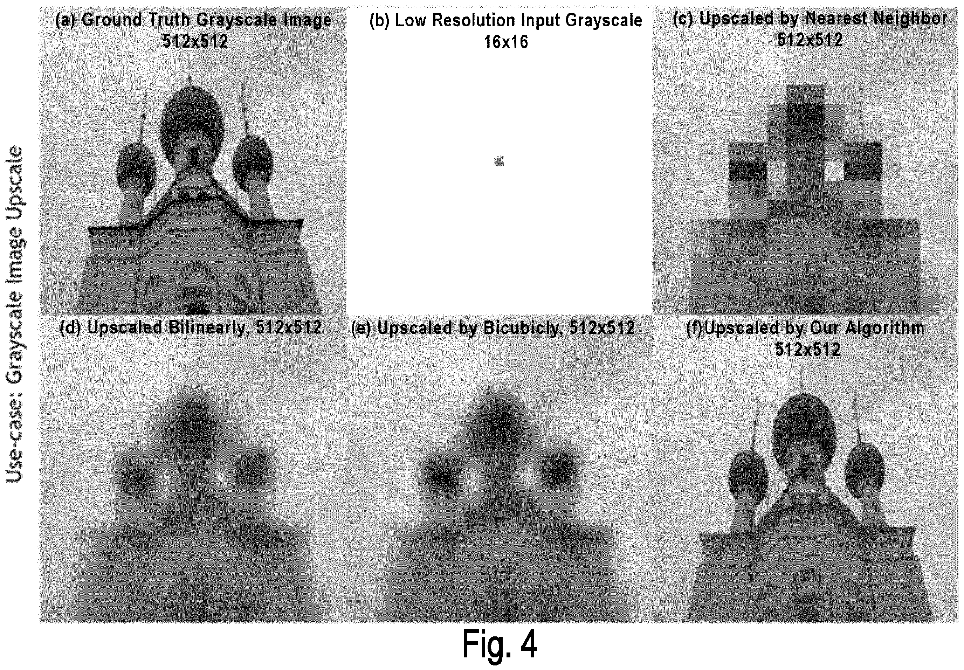

Referring to Figure 4 showing a comparative example therein in Figure 4(a) a ground truth grey scale image of the size 512x512 is provided. Figure 4(b) represents a low-resolution input grey scale image having a size of 16x16. 4(c) is the upscaling result by a nearest neighbor algorithm having again a size of 512x512 as the initial image. Figure 4(d) is the upscaling result by bi-linear interpolation. Figure 4(e) is the upscaling result by a bi-cubic interpolation. Figure 4(f) shows the upscaling result for the bilateral interpolation according to the present invention. As clearly visible, objects within the initial image are reconstructed with a sufficient accuracy.

Another comparative example is provided in Figure 5 showing an RGB image having a resolution of 2247x2663 in Figure 5(a). The initial RGB image is downscaled and an input mask is determined according to Figure 5(b). In addition, from the downscaled initial RGB image, a low-resolution guide image is determined according to Figure 5(f). Figures 5(c), 5(d) and 5(g) show comparative examples, wherein the masks are upscaled by nearest neighbor algorithm (Figure 5(c)), upscaled by bi-linear interpolation (Figure 5(d)) and bi-cubic interpolation (Figure 5(g)). In addition, Figure 5(h) shows the upscaled low-resolution input mask, wherein upscaling is performed by the bilateral interpolation according to the present invention. In comparison, Figure 5€ shows the ground truth mask directly calculated from the RGB high-resolution initial image of Figure 5(a). As clearly visible, small structures can be reconstructed with high liability. While calculating the ground truth mask image of Figure 5(e) requires handling the image data of the complete initial image, the low-resolution input mask can be calculated based on the downscale version of the initial image faster with reduced computational requirements.

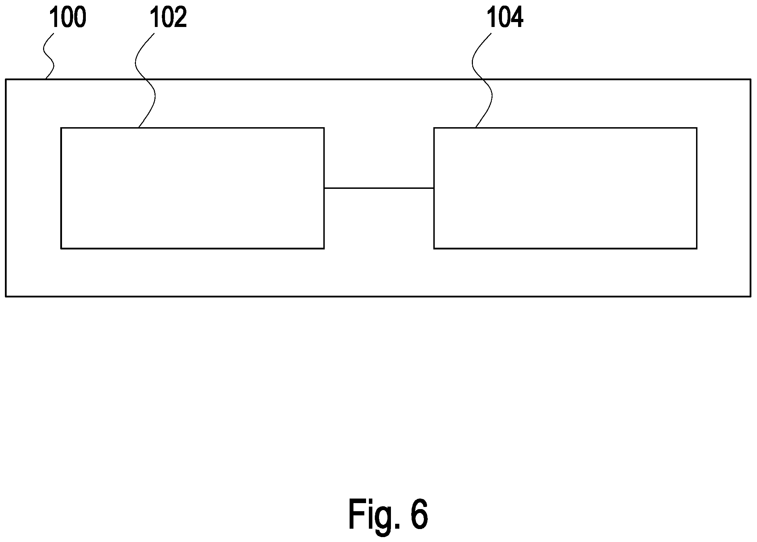

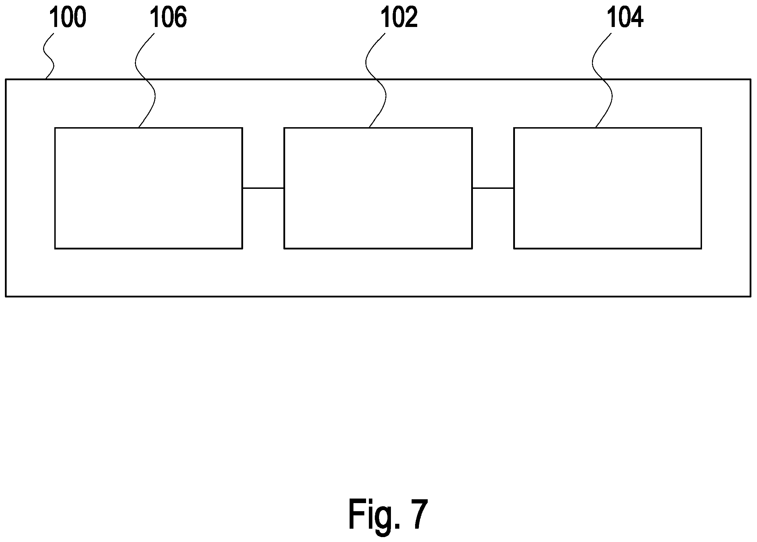

Figure 6 relates to a device according to the present invention. The device 100 comprises a processor 102 and a storage device 104. Therein, in the storage device 104 instructions are stored which, when executed by the processor 102, perform the steps of the method according to the present invention. Therein, the device 100 may be a user terminal and may comprise a camera module 106 as exemplified in Figure 7. The user terminal may be a smartphone, a tablet or the like. In particular, these devices have limited computational capabilities. Thus, it is beneficial to implement the bilateral interpolation method according to the present invention in order to apply image processing operations to the images fast, in particular in real-time, with low cost hardware.

In particular the processor 102 may comprise more than one processor. Alternatively, the processor 102 may comprise an image signal processor (ISP) implemented in an ISP pipeline in order to handle, manipulate and process the image data provided by the camera 106.

## Claims

1.    Method for bilateral interpolation of an image, including:

   Providing an input image to be upscaled by bilateral interpolation;
   Providing an initial image;
   Providing a guide image;
   For each pixel location in the final image or a corresponding pixel location in the initial image, select a region of interest, $ROI_{spat}$, in the input image around the respective pixel location and determine a spatial distance $d_{spat}$ from the pixel location to each pixel of the input image within the $ROI_{spat}$;
   For each pixel location in the initial image select a region of interest, $ROI_{int}$, in the guide image around the respective pixel location and determine an intensity distance $d_{int}$ from the pixel location to each pixel of the guide image within the $ROI_{int}$;
   Determine the pixel value at the pixel location on the basis of a weighted average over all pixels in the $ROI_{spat}$ based on the spatial distance and a weighted average over all pixels in the $ROI_{int}$ based on the intensity distance to generate a final image.

2.    Method according to claim 1, wherein the guide image is monochromatic.

3.    Method according to claim 1 or 2, wherein the initial image is transformed into a monochromatic initial image prior to determine the intensity distance.

4.    Method according to claim 2, wherein the transformation of the initial image and generation of the monochromatic guide image is performed by the same transformation.

5.    Method according to any of claims 1 to 4, wherein the intensity distance is the difference in an intensity value.

6.    Method according to any of claims 1 to 5, wherein the input image is derived from the initial image by downscaling and/or manipulation.

7. Method according to any of claims 1 to 6, wherein the $ROI_{int}$ for determining the intensity distance $d_{int}$ is equal to the $ROI_{spat}$ for determining the spatial distance $d_{spat}$.

8. Method according to any of claims 1 to 7, wherein the $ROI_{int}$ and/or the $ROI_{spat}$ is one of 2x2 pixel, 4x4 pixel, 8x8pixel, 16x16 pixel, 32x32 pixel or 64x64 pixel.

9. Method according to any of claims 1 to 8, wherein the spatial distance $d_{spat}$ and the intensity distance $d_{int}$ are combined by

$$d_{comb} = d_{spat} \cdot w_{spat} + d_{int} \cdot \left(1 - w_{spat}\right),$$

$w_{spat}$ being an interpolation weight.

10. Method according to any of claims 1 to 9, wherein the weighted average is determined by a weight $w_{pix}$ having an exponential decay with the spatial distance $d_{spat}$ and/or the intensity distance $d_{int}$ and/or the combined distance $d_{comb}$.

11. Method according to claim 10, wherein for each pixel location the pixel value is determined by

$$\mathrm{HR}_{\mathrm{pix}} = \sum_{\mathrm{pix} \in ROI} w_{pix} * \mathrm{LR}_{\mathrm{pix}}$$

with $HR_{pix}$ being the pixel value in the final image and $LR_{pix}$ the pixel value of the pixels in the input image.

12. Method according to any of claims 1 to 11, wherein the final image has a number of pixels 16 times more than the input image, preferably 32 times more and more preferably 64 times or more.

13. Device comprising a processor and a storage memory, wherein the storage memory stores instructions which, when executed by the processor, perform the steps of the method according to any of claims 1 to 12.

14. Software storage product storing instructions which, when executed by a processor, perform the steps of the method according to any of claims 1 to 12.

EP 4 621 707 A1

```
                              S02
```

| Providing an input image to be upscaled by bilateral interpolation | Providing an initial image | Providing a guide image |

S01

S03

For each pixel location in the final image or a corresponding pixel location in the initial image, select a region of interest, $ROI_{spat}$, in the input image around the respective pixel location and determine a spatial distance $d_{spat}$ from the pixel location to each pixel of the input image within the $ROI_{spat}$

S04

For each pixel location in the initial image select a region of interest, $ROI_{int}$, in the guide image around the respective pixel location and determine an intensity distance $d_{int}$ from the pixel location to each pixel of the guide image within the $ROI_{int}$

S05

Determine the pixel value at the pixel location on the basis of a weighted average over all pixels in the $ROI_{spat}$ based on the spatial distance and a weighted average over all pixels in the $ROI_{int}$ based on the intensity distance to generate a final image.

S06

## Fig. 1

Fig. 2

Fig. 3b

Fig. 3a

Fig. 4

EP 4 621 707 A1

Fig. 5

Fig. 6

EP 4 621 707 A1

Fig. 7

| | Europäisches<br>Patentamt<br>European<br>Patent Office<br>Office européen<br>des brevets | **EUROPEAN SEARCH REPORT** | **Application Number**<br>EP 24 16 5239 |
| --- | --- | --- | --- |

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
| --- | --- | --- | --- |
| X | US 2018/292206 A1 (OHKI MITSUHARU [JP])<br>11 October 2018 (2018-10-11)<br>* paragraph [0092] - paragraph [0095] *<br>----- | 1-14 | INV.<br>G06T5/20 |
| X | KOPF JOHANNES ET AL: "Joint bilateral<br>upsampling",<br>COMPUTER SUPPORTED COOPERATIVE WORK, ACM,<br>2 PENN PLAZA, SUITE 701 NEW YORK NY<br>10121-0701 USA,<br>29 July 2007 (2007-07-29), pages 96-es,<br>XP058594723,<br>DOI: 10.1145/1275808.1276497<br>ISBN: 978-1-60558-007-4<br>* abstract *<br>* 3, 4 *<br>----- | 1-14 | |
| X | RIEMENS O P GANGWAL NXP RESEARCH<br>(NETHERLANDS) A K ET AL: "Multistep joint<br>bilateral depth upsampling",<br>VISUAL COMMUNICATIONS AND IMAGE<br>PROCESSING; 20-1-2009 - 22-1-2009; SAN<br>JOSE,,<br>20 January 2009 (2009-01-20), XP030081730,<br>* 2, 3 *<br>----- | 1-14 | |
| X | WANG JUHONG ET AL: "Semantic segmentation<br>of high-resolution images",<br>SCIENCE CHINA INFORMATION SCIENCES,<br>SCIENCE CHINA PRESS, BEIJING,<br>vol. 60, no. 12,<br>7 November 2017 (2017-11-07), pages 1-6,<br>XP036358122,<br>ISSN: 1674-733X, DOI:<br>10.1007/S11432-017-9252-5<br>[retrieved on 2017-11-07]<br>* abstract *<br>* 3.3 *<br>----- | 1-14 | |

**TECHNICAL FIELDS<br>SEARCHED (IPC)**

G06T

-/--

The present search report has been drawn up for all claims

| Place of search | Date of completion of the search | Examiner |
| --- | --- | --- |
| Munich | 19 September 2024 | Gitzenis, Savvas |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/267494 A1 (COHEN MICHAEL F [US] ET AL) 30 October 2008 (2008-10-30)<br>* paragraph [0004] - paragraph [0007] *<br>* paragraph [0074] - paragraph [0098] *<br>----- | 1-14 | |

**TECHNICAL FIELDS SEARCHED (IPC)**

The present search report has been drawn up for all claims

| Place of search | Date of completion of the search | Examiner |
|---|---|---|
| Munich | 19 September 2024 | Gitzenis, Savvas |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

 

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 24 16 5239

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2024

| Patent document cited in search report | Publication date | Patent family member(s) | | Publication date |
|---|---|---|---|---|
| US 2018292206 A1 | 11-10-2018 | CN | 108139484 A | 08-06-2018 |
| | | JP | 2018036102 A | 08-03-2018 |
| | | US | 2018292206 A1 | 11-10-2018 |
| | | US | 2020191565 A1 | 18-06-2020 |
| | | WO | 2018042887 A1 | 08-03-2018 |
| US 2008267494 A1 | 30-10-2008 | NONE | | |

EPO FORM P0459

For more details about this annex : see Official Journal of the European Patent Office, No. 12/82